# EUROPEAN PATENT APPLICATION

(11) **EP 4 074 434 A1**
(43) Date of publication of application: **19.10.2022**
(21) Application number: 19955988.1
(22) Date of filing: 13.12.2019
(51) Int. Cl.: B22F 1/00, B22F 3/16, B22F 9/08, C22C 1/04, C22C 38/00, C22C 38/14

(54) **ALLOY, WIRE, AND ALLOY POWDER**

(71) Applicant: MITSUBISHI ELECTRIC CORPORATION, Chiyoda-ku Tokyo 100-8310 (JP)
(72) Inventor: TANIHARA, Yasutomo, Tokyo 100-8310 (JP); CHIBAHARA, Hiroyuki, Tokyo 100-8310 (JP)
(74) Representative: Sajda, Wolf E.
(86) International application number: PCT/JP2019/049027
(87) International publication number: WO 2021/117239

(57) **Abstract**

A Super Invar alloy includes Ni of 30 to 35 percent by mass, Co of 3 to 6 percent by mass, Ti of 0.02 to 1.0 percent by mass, Mn of 0 to 0.2 percent by mass, an inevitable impurity including S, and the balance Fe. The Super Invar alloy does not include an additive other than Ti and Mn, as an additive. The Super Invar alloy includes the Ni of 32.3 to 32.5 percent by mass, the Co of 4.4 to 5.1 percent by mass, the Ti of 0.02 to 1.0 percent by mass, and the S of 0.007 to 0.1 percent by mass.
The Super Invar alloy is an alloy having good high temperature ductility, low hot crack sensitivity, and low thermal expansibility of equal to or lower than 1 ppm/°C. It is applicable to use Zr or Hf instead of Ti.

## Description

### Technical Field

The present invention relates to an alloy.

The alloy of the present invention relates to an Fe-based low thermal expansion alloy that can be used for welding and three-dimensional (3D) producing.

### Background Art

In recent years, there has been improved accuracy of an industrial machine and semiconductor manufacturing equipment, and in order to avoid deviation in dimension by heat, a low-thermal expansion alloy has been used.

As a representative of low thermal expansion alloys, there is an Fe-36%Ni Invar alloy having a low thermal expansion coefficient. Especially, as a member required to have a high degree of accuracy, an Fe-32%Ni-5%Co Super Invar alloy is used. The thermal expansion coefficient of the Super Invar alloy is known to be equal to or less than 1 ppm/°C.

However, it is known that this kind of Invar alloy has austenite phases as main phases, and the austenite phases have hot crack sensitivity.

Therefore, there is a problem that a crack is generated when an Invar alloy is used as a welding material.

In recent years, especially, three-dimensional producing technologies have been actively researched. For three-dimensional producing, a repetitive process of melting and solidification of raw materials is necessary. It is possible to regard this repetitive process as a consecutive phenomenon of welding. Therefore, in order to use an Invar alloy as a welding material or a raw material of three-dimensional producing, it is regarded necessary to ameliorate the hot crack sensitivity.

A detailed description of hot crack sensitivity will be given.

Fe and Ni included in an Invar alloy includes S as an inevitable impurity in minute quantities in a refining process. It is known that S reacts with Fe to be FeS. While the temperature at which a molten Invar alloy is solidified is in the vicinity of 1500 °C, the melting point of FeS is in the vicinity of 1190 °C, which is sufficiently lower than the melting points of the main phases. As described, FeS with low melting points permeates into grain boundaries of an Fe-Ni austenite phase as a liquid phase at the time of solidification, and by this permeation, an intergranular cracking occurs.

There has been taken an approach to decrease hot crack sensitivity by adding Nb or C in an Fe-36%Ni Invar alloy. However, such an addition of impurities degrades a superior thermal expansion coefficient that the Invar alloy has. That is, by adding Nb or C as an additive material in a Super Invar alloy, the thermal expansion coefficient becomes 1 ppm/°C or more, and there is a problem that it is impossible to take advantage of low thermal expansion unique to a Super Invar alloy.

It is also known that, as a measure to maintain the thermal expansion coefficient, by controlling not only a composition but also a structure, low thermal expansion coefficient is realized.

For example, in Patent Literature JP 4 213 901 B2, by controlling the structure through thermal treatment, rolling or forging at the time of casting, low thermal expansion is realized. However, there is a problem that it is impossible to roll or forge, and to control the structure when such a Super Invar alloy is applied as a welding material or a raw material of three-dimensional producing.

Further, in many cases, high intensity is realized by a peculiar metallic structure by rapid quenching in three-dimensional producing, and there is a case wherein thermal treatment is not preferred as post-treatment.

As a result, when a conventional Super Invar alloy is used for welding or three-dimensional producing as a raw material, it is easily assumed that the thermal expansion coefficient is degraded even when hot crack sensitivity is improved.

### Citation List

### Patent Literature

Patent Literature 1: JP 4 213 901 B2

### Non-Patent Literature

Non-Patent Literature 1: KANEKO, Hideo, NISHIZAWA, Taiji, and TAMAKI, Koreaki, "Sulfide-forming Tendency of Alloying Elements in Steel", Journal of the Japan Institute of Metals and Materials (1963), Vol. 27(7), pp. 299-304 (July 1963)
Non-Patent Literature 2: TSUDA, Masaomi, "Effect of Minor Alloying Elements on the Mean Thermal Expansion Coefficient of Fe-36%Ni Invar Alloy", 1994, Vol. 80(12), pp. 944-949 (December 1, 1994)

### Summary of Invention

### Technical Problem

As seen above, as a material of welding or three-dimensional producing, there has not yet been developed a Super Invar alloy that satisfies a thermal expansion coefficient of 1 ppm/°C.

The present invention is aimed at providing an alloy having a small thermal expansion coefficient.

### Solution to Problem

There is provided according to one aspect of the present invention, an alloy which includes:
Ni of 30 to 35 percent by mass;
Co of 3 to 6 percent by mass;
Ti of 0.02 to 1.0 percent by mass;
an inevitable impurity including S; and
Fe being a balance.

### Advantageous Effects of Invention

According to the present invention, by the addition of Ti, it is possible to obtain an alloy whose high temperature ductility is ameliorated, and hot crack sensitivity is decreased.

### Brief Description of Drawings

- FIG. 1: is a relationship diagram between temperature and ductility;
- FIG. 2: is a diagram illustrating an implementation example and a comparative example according to a first embodiment;
- FIG. 3: is a state diagram of Ti and S;
- FIG. 4: is a diagram illustrating relation between ductility and temperature of an Implementation Example 1 and a Comparative Example 1 according to the first embodiment;
- FIG. 5: is a diagram illustrating an implementation example and a comparative example according to the first embodiment;
- FIG. 6: is a diagram illustrating an implementation example and a comparative example according to the first embodiment;
- FIG. 7: is a diagram illustrating an implementation example and a comparative example according to a second embodiment; and
- FIG. 8: is a diagram illustrating a composition of a preferred Super Invar alloy according to the first and second embodiments.

### Description of Embodiments

### Definition

The following symbols include meanings as follows:
"%": percent by mass (mass percentage)
"A%-B%": Equal to or more than A percent by mass,
and equal to or less than B percent by mass
"<B%": Equal to or more than 0 percent by mass,
and equal to or less than B percent by mass.

### First Embodiment.

In the present embodiment, as a concrete example of an alloy, a Super Invar alloy used for welding or three-dimensional producing will be described.

### Basic Content For Consideration

First, basic contents for consideration in order to decrease hot crack sensitivity will be described.

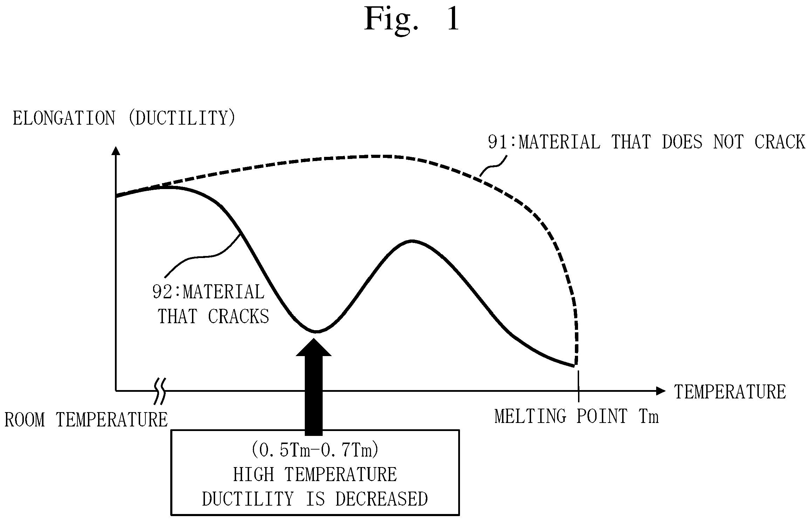

FIG. 1 is a relationship diagram between temperature and ductility.

In FIG. 1, a horizontal axis is temperature, and a vertical axis is ductility.

A material 91 that does not crack in FIG. 1 is a material whose ductility is not decreased even when temperature changes.

A material 92 that cracks in FIG. 1 is a material whose ductility is decreased when temperature changes.

According to Japan Welding Engineering Society, one of the causes of high crack sensitivity to hot cracking is decrease in ductility at the time when the temperature is high. High temperature in this case indicates, in particular, 0.5 Tm to 0.7 Tm relative to a melting point (hereinafter indicated as Tm). In this case, Tm is an absolute temperature.

Therefore, the inventors of the present invention have considered that a material with low crack sensitivity to hot cracking is a material whose ductility is not decreased even under high temperature, as with the material that does not crack 91 illustrated in FIG. 1, and have addressed amelioration in high temperature ductility.

Thus, in the present embodiment, by providing a casting material obtained by adding minor elements in a Super Invar alloy, high temperature ductility under 0.5 Tm to 0.7 Tm is evaluated.

Further, by use of casting materials whose high temperature ductility have been ameliorated, evaluation is actually performed by welding or three-dimensional producing, and a casting material whereby welding or three-dimensional producing is possible without generating cracks is deemed to be a preferred material.

### Concrete Test Process

### Melting and Casting Process

By preparing Fe, Ni and Co being elemental compositions of a Super Invar alloy, and Ti and Mn being additive materials, melting and casting are performed in a vacuum melting furnace.

In this case, the composition of Ni and Co, and the composition of inevitable impurities are defined as follows.

As a composition of a Super Invar alloy whose thermal expansion coefficient becomes the smallest at room temperature, Ni32% and Co5% is known. Therefore, at this time, Ni:30-35% and Co:3-6% is adopted.

As a concentration of impurities included in a common raw material (specifically, Fe or Ni), P: <0.01%, Si: <0.5% and the other impurity concentration <0.2% is adopted.

Heating treatment is performed on the casting material obtained for one hour at 1000 °C for homogenization, and then, the casting material is cooled by furnace cooling.

Thus, a casting material for which heating treatment aimed at homogenization has been terminated is obtained.

### Tensile Test Process

By using the casting material after heating treatment, a high-temperature tensile test is performed in the range from 700 °C to 900 °C.

Additionally, for comparison, a tensile test at room temperature is performed in parallel. In this case, a casting material whose elongation of fracture obtained by the tensile test at 700 °C to 900 °C is smaller than an elongation of fracture at room temperature is regarded as improper since high temperature ductility has not been ameliorated. To the contrary, a casting material whose elongation of fracture obtained by the tensile test at 700 °C to 900 °C is larger than an elongation of fracture at room temperature is regarded as proper since amelioration effect of high temperature ductility has been obtained.

### Analysis Process of S

In order to perceive forms of compounds of impurity S, evaluation of the casting material after heating treatment is performed by scanning electron microscope (SEM) and transmission electron microscope (TEM).

### Test Usage Process

From the casting material whose high temperature ductility has been ameliorated, a wire or powders are prepared, and whether a cracking is generated at the time of welding or three-dimensional producing is verified; thus, the casting material wherein cracking is not generated is evaluated to be proper in weldability.

### Measurement Process of Thermal Expansion Coefficient

Lastly, regarding the casting material judged to be proper in weldability, the thermal expansion coefficient is measured in the range from 0 °C to 60 °C, and an average thermal expansion coefficient is identified.

### Implementation Example and Comparison Example

Next, more detailed description will be provided by giving implementation examples and comparative examples.

Each process of the comparative examples and the implementation examples as described below is performed under the same test condition as the test condition as described in each process of the concrete test mentioned above.

### Comparison Examples 1 and 2

The Comparative Example 1 of the present embodiment is a common Super Invar alloy. In the common Super Invar alloy, only Mn is added in anticipation of a trapping effect of S. It is well known that when Mn is added in the Super Invar alloy, by reaction with S being an inevitable impurity, MnS is generated.

### Melting and Casting Process

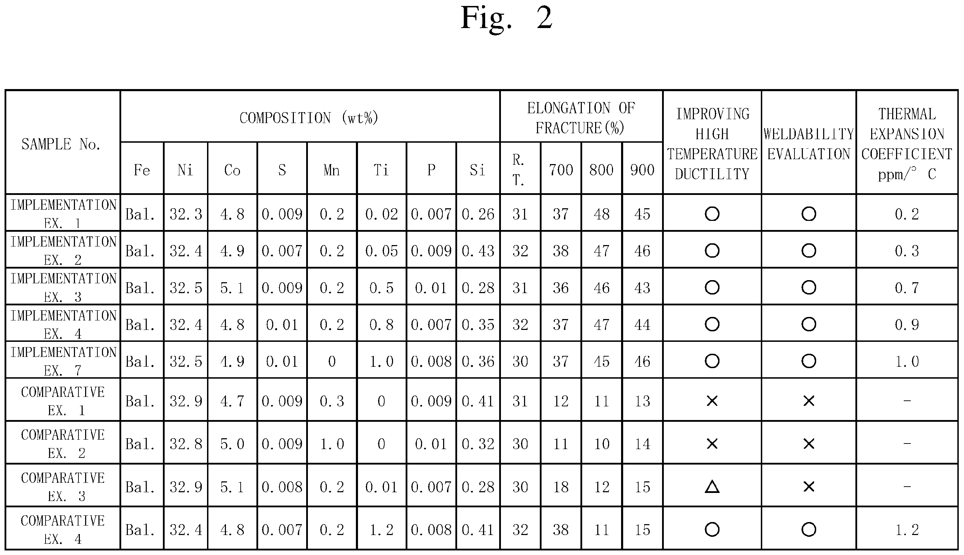

Fe, Ni, Co and Mn are weighed to be the compositions of Fe, Ni, Co and Mn as illustrated in the Comparative Examples 1 and 2 in FIG. 2, and melted in a vacuum melting furnace.

After melting several types of alloys, by pouring the alloys into a mold so as not to generate shrinkage cavities at a solidification time, a casting material is prepared.

By holding the casting material obtained for one hour at 1000 °C in an atmospheric furnace, homogenization processing is performed.

### High Temperature Ductility Evaluation Process

In order to evaluate high temperature ductility of the casting material obtained, a flanged tensile test piece of Φ6 mm with gauge length of 30 mm is prepared.

### Tensile Test Method

A strain rate is set to be 3.3 × 10⁻³/s.

Since Tm of an Invar alloy is in the vicinity of 1500 °C, tests are performed for every 100 °C in a temperature range from 700 °C to 900 °C, being 0.5 Tm to 0.7 Tm.

A tensile test piece is set in a testing machine, and then surrounded by a muffle furnace so that the test piece part is thoroughly covered, and the temperature is elevated.

A test is started at the time when the temperature in the muffle furnace is elevated to a prescribed temperature, and the temperature becomes constant.

By dividing an elongation of the test piece at the time of fracturing by the length of test piece before the test, an elongation of fracture is calculated.

Further, in order to evaluate whether high temperature ductility is improved, a test is performed under the same test condition also at room temperature.

By comparing an elongation of fracture at room temperature with an elongation of fracture at high temperature, it is evaluated whether an improvement effect of high temperature ductility is obtained. As elongation at this time, true strain is adopted.

### Test Result

As a result, in the Comparative Examples 1 and 2, it is confirmed that the ductility at high temperature is seriously decreased compared to ductility at room temperature. This phenomenon is a typical example of generation of weld cracking, and it is proved that it is difficult for Mn which is publicly known to be added in a Super Invar alloy to improve the high temperature ductility.

### Analysis Process of S

Next, in order to evaluate a form of impurity S, it is observed that in what form impurity S is precipitated in SEM or TEM. Composition distribution of a precipitate considered as an impurity is measured by using a composition analysis function by a wave-length dispersive X-ray spectroscopy or an energy dispersive X-ray spectroscopy pertaining to SEM.

In the Comparative Examples 1 and 2, MnS is detected when analysis is performed by SEM-EDX (scanning electron microscope-energy dispersive X-ray spectroscopy).

### Weldability Evaluation Process

With respect to a composition wherein an elongation of fracture obtained by a tensile test at 700 °C to 900 °C is greater than an elongation of fracture at room temperature, it is evaluated whether a crack is not generated at the time when welding or three-dimensional producing is actually performed. Evaluation is performed in either of two ways as follows.

First Evaluation:
Evaluation is performed by forming a wire of Φ1 mm through wire drawing of the casting materials in the Comparative Examples 1 and 2, and welding plates of an Invar alloy together. Otherwise, evaluation is performed by forming a produced object with a width of 100 mm and a height of 30 mm by directed energy deposition (DED).

Second Evaluation:
By performing vacuum melting on the compositions of the Comparative Examples 1 and 2, powders are produced by water atomizing or gas atomizing, and a block with a length of 10 mm, a width of 10 mm and a height of 30 mm is produced by power bed fusion (PBF) by the use of electron beam or laser.

By performing welding or three-dimensional producing of wire or powders, a composition wherein a crack is not generated in appearance, and wherein a crack is not identified in the transmission image by X-ray computed tomography is regarded as proper in weldability.

In the Comparative Examples 1 and 2, a crack is generated such that a weld crack is identified visually; therefore, it is regarded as improper in weldability. Based on this result, it is estimated that a weld crack is generated by decrease in high temperature ductility.

### Implementation Examples 1 through 4, Comparison Examples 3 and 4

Thus, the inventors of the present invention focus on a well-known effect of adding Mn.

Hereinafter, the reason why Mn is often added in a Super Invar alloy will be described.

As described with respect to hot crack sensitivity, it is well known that when inevitable impurity S exists in an alloy, S causes a chemical reaction with Fe to become FeS. FeS has a melting point in the vicinity of 1190 °C, which is lower than the solidification temperature of Fe. Therefore, even when crystals of Fe solidify, FeS is leached out in grain boundaries, and an intergranular cracking is generated. Therefore, generally, by adding Mn superior in reactivity with S more than Fe, and generating MnS having a melting point of 1610 °C, an intergranular cracking due to liquefaction of compounds of S is prevented.

However, in the Comparative Example 1 of the present embodiment, with respect to a Super Invar alloy with Mn added, it is confirmed that high temperature ductility is decreased, and a weld crack is generated.

According to the description above, the inventors of the present invention considers that compounds of S play important roles in decrease in crack sensitivity of a Super Invar alloy or decrease in high temperature ductility of a Super Invar alloy.

As one of the mechanisms for causing decrease in high temperature ductility, grain-boundary segregation of a compound of MnS is considered.

MnS has a high melting point, and a liquefaction crack is not generated; although, it is known that MnS has an inclination that segregation is easily formed in the surface, and it is estimated that high temperature ductility is decreased since a compound of MnS is precipitated in grain boundaries at the time of welding or at high temperature.

Therefore, it is considered that in a case of an element having a high affinity for S more than Mn, whose sulfide compound with S having a higher melting point than MnS, being a stable sulfide compound energetically stable, grain-boundary segregation does not occur, and decrease in high temperature ductility is improved.

From this point of view, the inventors of the present invention select Ti as a candidate material by reference to Non-Patent Literature 1.

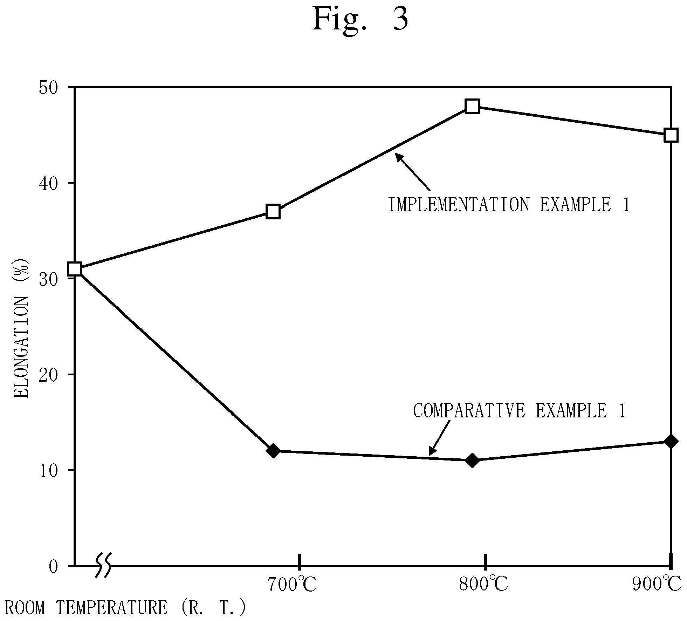

FIG. 3 illustrates a state diagram of Ti and S.

Ti has a high affinity for S, and it is confirmed that intermetallic compounds of TiS_{2-X} are generated. X is here indicated as X since an accurate composition is unclear. In the state diagram of FIG. 3, the range of X is 0 through 1.

Since it is basically considered that precipitation occurs from an intermetallic compound having a high melting point, it is assumed that intermetallic compounds between TiS and TiS₂ are precipitated. The melting points of the intermetallic compounds indicated as TiS_{2-X} are higher than 1850 °C, which are not explicitly known.

### Melting and Casting Process

Therefore, in compositions of the Implementation Examples 1 to 4 and 7 as illustrated in FIG. 2, under the same condition as the comparative example, a Super Invar alloy with Ti added is produced. After producing the Super Invar alloy, under that same condition as the comparative example, homogenization of the Super Invar alloy is performed.

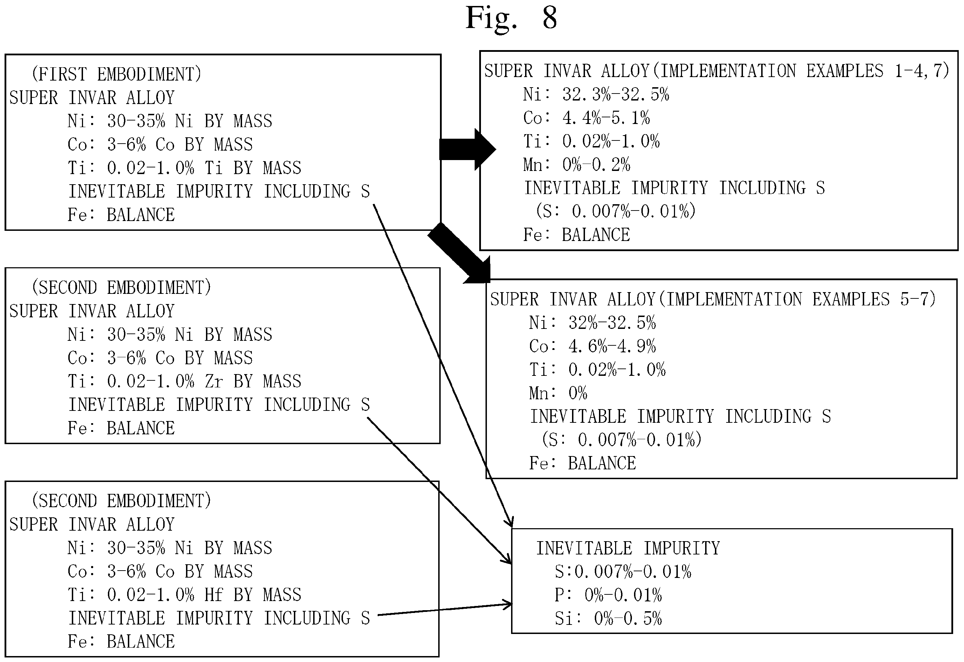

As illustrated in FIG. 2 and FIG. 8, metallic compositions of the Implementation Examples 1 to 4 and 7 are in the range as follows:
Ni: 32.3%-32.5%
Co: 4.8%-5.1%
Ti: 0.02%-1.0%
Mi: 0%-0.2%
Fe and inevitable impurities: the balance
   The inevitable impurities include following.
   S: 0.007%-0.01%
   P: 0.007%-0.01%
   Si: 0.26%-0.43%
Fe, Ni and Co are essential elements that configure the Super Invar alloy.

Ti and Mn are added substances.

In the Implementation Examples 1 to 4, as additives, only Ti and Mn are added.

In the Implementation Examples 1 to 4, no additive other than Ti and Mn is included as additives.

In the Implementation Examples 1 to 4, no other substances including Cr, Al, Nb, Mo, W, V, Zr, Si, Cu, C, S, Be and B are added.

In the Implementation Example 7, only Ti is added as an additive.

In the Implementation Example 7, no additive is included other than Ti as an additive.

In the Implementation Example 7, no other substances including Cr, Al, Nb, Mo, W, V, Zr, Si, Cu, C, S, Be and B are added.

The reason why no other substances including Cr, Al, Nb, Mo, W, V, Zr, Si, Cu, C, S, Be and B are added is that, as described in Non-Patent Literature 2, a thermal expansion coefficient is increased by adding the other substances. In order to reduce hot crack sensitivity while preserving a low thermal expansion coefficient, only Ti and Mn are, or only Ti is necessary for forming a sulfide, and the other substances are unnecessary.

### High Temperature Ductility Evaluation Process

As illustrated in FIG. 2, in the Implementation Examples 1 to 4 and 7, high temperature ductility is ameliorated than the ductility at room temperature, expressing excellent high temperature ductility.

In the Comparative Example 1 not added with Ti, a fracture is generated when ductility is about 10 % at high temperature equal to or higher than 700 °C.

In the Implementation Example 1 with Ti added in very small amounts, ductility is improved, and ductility about 40 % can be confirmed.

In an ordinary metal, it is common that ductility is improved at high temperature, and the attribute that ductility is reduced at high temperature is called intermediate temperature embrittlement. It is considered that in a normal Super Invar alloy as well, ductility is degraded due to expression of intermediate temperature embrittlement.

In the Implementation Examples 1 to 4 and the Comparative Examples 3 and 4, when an additive amount of Ti is examined, it is confirmed that high temperature ductility is improved in a case wherein the additive amount of Ti is equal to or more than 0.02 %. Meanwhile, in the Comparative Example 3, when the additive amount of Ti is set to be 0.01 %, high temperature ductility is not sufficiently improved; thus, it is estimated that preferred crack sensitivity cannot be developed.

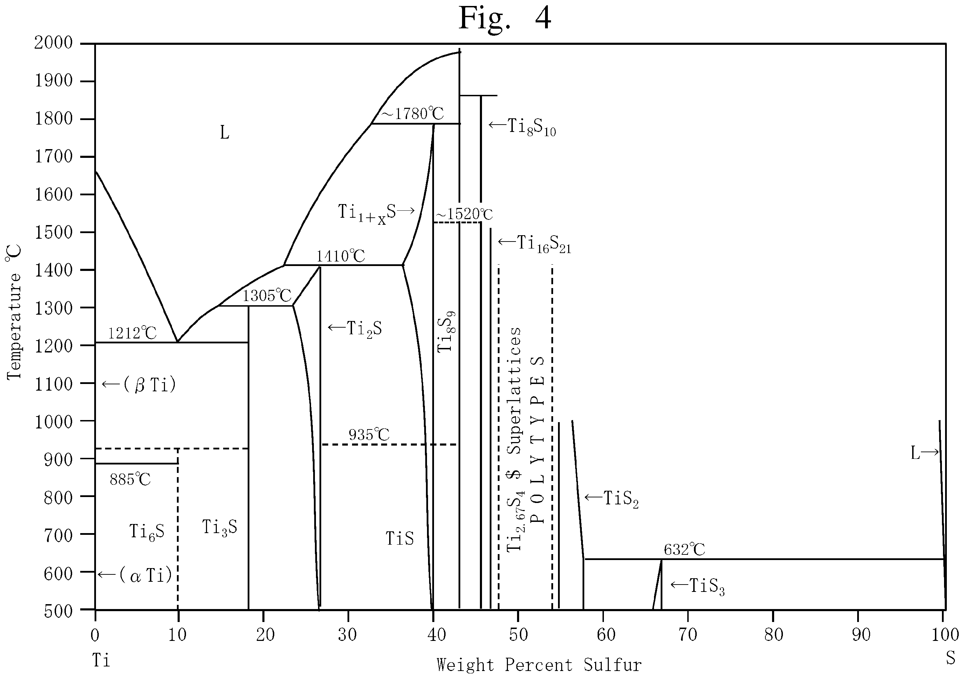

As a representative example of results of the high temperature ductility mentioned above, in FIG. 4, relations between ductility and temperature in the Implementation Example 1 and the Comparative Example 1 are plotted.

As can be seen from FIG. 4, ductility in the Implementation Example 1 being a Super Invar alloy with Ti added is not decreased. The inventors of the present invention focus on, as a material whose hot crack sensitivity becomes small, that ductility at high temperature is not decreased; however, as a result, it is confirmed that a correlation with the diagram illustrated in FIG. 1 is revealed.

### Analysis Process of S

In order to discuss a factor of excellent high temperature ductility due to addition of Ti, the Implementation Examples 1 to 4 are analyzed by SEM and EDS.

From the Implementation Examples 1 to 4, Ti, Mn and S are detected. It is considered, as what is estimated from the state diagram, TiS_{2-X} being intermetallic compounds of Ti and S, MnS being an intermetallic compound of Mn and S, or Mn-Ti-S being intermetallic compounds of Mn, Ti and S wherein Mn and Ti are mixed.

### Weldability Evaluation Process

Accordingly, it is evaluated whether excellent high temperature ductility is effective to cracks generated at the time of welding or three-dimensional printing. When samples are produced by a three-dimensional printer from Super Invar alloys of the Implementation Examples 1 to 4, a crack is not generated, and a crack is not identified even in a transmission image by an X-ray computed tomography. According to this result, by adding Ti, it is possible to ameliorate cracks generated in the general Super Invar alloys illustrated in the Comparative Examples 1 and 2.

However, since a Super Invar alloy has an outstanding low thermal expansion coefficient (equal to or lower than 1 ppm/°C), it is necessary to limit an additive amount of Ti. Since it is also indicated in Patent Literature 1 that excessive addition of Ti increases crack sensitivity, it is necessary to limit the additive amount of Ti.

### Measurement Process of Thermal Expansion Coefficient

As illustrated in FIG. 2, in the Implementation Examples 1 to 4 and 7, it is possible to realize low thermal expansion coefficients equal to or lower than 1 ppm/°C, all being values of standard. Meanwhile, in the Comparative Example 4, it is 1.2 ppm/°C, and it is impossible to realize a sufficient low thermal expansion coefficient. The reason is considered to be such that, by adding a quantity of Ti, impurities are increased in the Super Invar alloy, which leads to a negative effect on a low thermal expansion coefficient.

Therefore, it is proved that, from the present Implementation Examples 1 to 4 and the Comparative Examples 3 and 4, the additive amount of Ti for decreasing hot crack sensitivity while maintaining a low thermal expansion coefficient is equal to or more than 0.02%, and equal to or lower than 1.0%.

### Implementation Examples 5 to 7, Comparison Examples 5 and 6

Next, it is examined whether it is possible to obtain an effect of improving high temperature ductility at the time when Ti is added even when Mn is not added.

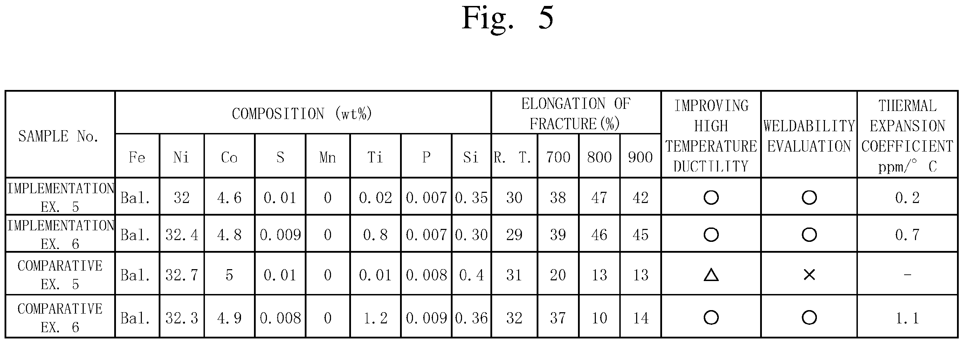

As illustrated in FIG. 2 and FIG. 5, the metallic compositions in the Implementation Examples 5 to 7 are in the range as follows:
Ni: 32%-32.5%
Co: 4.6%-4.9%
Ti: 0.02%-1.0%
Mn: 0%
Fe and inevitable impurities: the balance
   Inevitable Impurities include following:
   S: 0.009%-0.01%
   P: 0.007%-0.008%
   Si: 0.30%-0.36%
Fe, Ni and Co are essential elements that configure the Super Invar alloy.

Ti is an added element.

In the Implementation Examples 5 to 7, only Ti is added as an additive, and

in the Implementation Examples 5 to 7, no additive other than Ti is included.

In the Implementation Examples 5 to 7, no other substances including Mn, Cr, Al, Nb, Mo, W, V, Zr, Si, Cu, C, S, Be and B are added.

### Welding and Casting Process

Next, in order to evaluate superiority of Ti forming compounds of S, a Super Invar alloy is produced by preparing Fe, Ni and Co, not added with Mn, and heating and cooling are performed.

Specifically, a Super Invar alloy is produced in the compositions according to the Implementation Examples 5 and 6 illustrated in FIG. 5, and the Implementation Example 7 illustrated in FIG. 1, and heating and cooling are performed.

### High Temperature Ductility Evaluation Process

As illustrated in FIG. 2 and FIG. 5, as a result of high-temperature tensile tests in the Implementation Examples 5 to 7, it is possible to obtain an effect of improving high temperature ductility even without addition of Mn. However, in a case of the Comparative Example 5, wherein the concentration of Ti is 0.01 % similarly to the Comparative Example 3, it is impossible to develop a sufficient effect. According to this result, it is proven that high temperature ductility is improved by an additive amount of Ti even without addition of Mn, and it is confirmed that improvement of high temperature ductility relies on the additive amount of Ti.

### Weldability Evaluation Process

When weldability evaluation is performed by using this Super Invar alloy, weld cracking is not identified in the Implementation Examples 5 to 7 wherein high temperature ductility is improved.

### Measurement Process of Thermal Expansion Coefficient

As illustrated in FIG. 5, in the Implementation Examples 5 to 7, it is possible to realize low thermal expansion coefficients equal to or lower than 1 ppm/°C, all being values of standard.

Meanwhile, as in the Comparative Example 6 wherein the additive amount of Ti is 1.2 %, it is impossible to realize a sufficient low thermal expansion coefficient, which is 1.1 ppm/°C. It is considered the reason is that an element Ti being an impurity for a Super Invar alloy is mixed into in great quantity.

By the Comparative Example 6, it is confirmed that there is a limit to an additive amount of Ti as with the Comparative Example 4.

According to the above results, as illustrated in FIG. 8, when the composition of inevitable impurities is as follows, the composition of a Super Invar alloy as follows is suitable.
Ni: 30%-35%
Co: 3%-6%
Ti: 0.02%-1.0%
Mn: 0%-0.2%
Fe and inevitable impurities: the balance
   Inevitable impurities include following:
   S: 0.007%-0.01%
   P: 0%-0.01%
   Si: 0%-0.5%.

### Implementation Examples 8 and 9, Comparison Examples 7 and 8

In the implementation examples and comparative examples above, it is described that a favorable result is obtained by intermetallic compounds of Ti and S, as an effect of adding Ti.

In the present Implementation Examples 8 and 9, and the Comparative Examples 7 and 8, by intendedly adding S in a Super Invar alloy, it is examined whether a correlation is identified among Ti, S and improvement of high temperature ductility.

### Welding and Casting Process

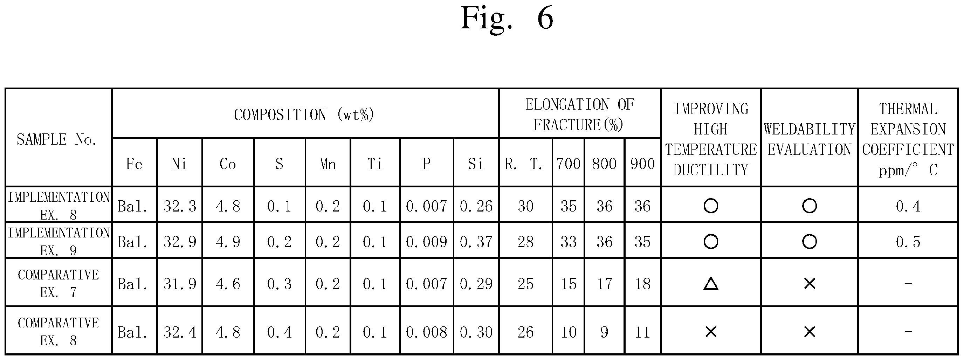

For validation, in the composition as illustrated in FIG. 6, a Super Invar alloy is produced by fixing Ti to 0.1%, and adding S as much as Ti (0.1%) to 4 times as much as Ti (0.4%).

### Tensile Test

Next, high temperature ductility in the Implementation Examples 8 and 9, and the Comparative Examples 7 and 8 is evaluated.

As a result, as illustrated in FIG. 6, it is confirmed that in the Implementation Examples 8 and 9 wherein concentration of S is up to twice the concentration of Ti, high temperature ductility is improved; whereas, in the Comparative Examples 7 and 8 wherein concentration of S is added to be 3 to 4 times the concentration of Ti, high temperature ductility is not improved.

According to this, it is confirmed that high temperature ductility is changed relative to concentration of S, and it is again confirmed that an element that has a negative effect on high temperature ductility is S. Further, it is also proved that intermetallic compounds of Ti and S are effective to improvement of high temperature ductility.

As a factor that high temperature ductility is not improved when a Ti-to-S mass ratio is less than 0.5 (Ti/S < 0.5), it is estimated that intermetallic compounds indicated by TiS_{2-X} are not sufficiently formed. In the Comparative Examples 7 and 8 wherein the amount of S is large, since Ti is lacking, intermetallic compounds indicated by TiS_{2-X} are not generated sufficiently. Accordingly, it is considered that high temperature ductility is not improved.

Thus, it is possible to confirm that the Ti-to-S mass ratio needs to be Ti/S ≥ 0.5.

### Characteristic

The Super Invar alloy of the present embodiment is a concrete example of a low thermal expansion alloy and an alloy.

By suitably adding Ti in the Super Invar alloy of the present embodiment, impurity S that is inevitably included in Fe and Ni reacts with Ti to form intermetallic compounds of Ti and S.

The intermetallic compounds include TiS_{2-X}(X = 0 through 1). Otherwise, the intermetallic compounds include Mn-Ti-S.

It is possible to provide the Super Invar alloy of the present embodiment as a wire produced through wire drawing. By using this wire as a welding material, it is possible to produce a metallic weldment.

It is possible for the Super Invar alloy of the present embodiment to provide alloy powders produced by water atomizing or gas atomizing. It is possible to produce a metallic three-dimensional produced object by using this alloy powders as raw powders.

It is possible for the Super Invar alloy of the present embodiment to obtain a low thermal expansion alloy whose thermal expansion coefficient is equal to or lower than 1 ppm/°C without need for controlling a structure.

According to the present embodiment, in the Super Invar alloy, by adding Ti in order to form intermetallic compounds with S, having high melting points, compounds of S are inhibited from being segregated in grain boundaries.

According to the present embodiment, it is possible to improve high temperature ductility, and to obtain a low thermal expansion alloy wherein hot crack sensitivity is decreased.

According to the present embodiment, in a case wherein a repeating process of heating and cooling such as three-dimensional producing exists, or in a case of welding, it is possible to obtain a low thermal expansion alloy whose thermal expansion coefficient is maintained to be equal to or lower than 1 ppm/°C in the range from 0 °C to 60 °C.

According to the present embodiment, even in a case wherein control over a structure by thermal treatment at the time of casting, rolling or forging is difficult, it is possible to obtain a low thermal expansion alloy whose thermal expansion coefficient is maintained to be equal to or lower than 1 ppm/°C.

### Second Embodiment.

In the second embodiment, description will be provided with respect to points different from those in the first embodiment.

### Implementation Examples 10 and 11

In the Implementation Examples 1 to 9, and the Comparative Examples 1 to 8, from a point of view of effectiveness to improvement of high temperature ductility, description has been made by focusing on intermetallic compounds wherein Ti is combined with S, as a trapping effect of S.

In the present Implementation Examples 10 and 11, description will be provided by focusing on elements other than Ti, with respect to metallic elements whereby similar effects can be obtained.

It has been described as a factor of focusing on Ti that it is possible for Ti to easily form compounds of S more than Mn, and that intermetallic compounds of Ti and S have high melting points, being energetically stable.

Based on the present concept, as elements whereby the similar effects can be obtained, Zr and Hf are focused on.

In Non-Patent Literature 1, it is indicated that sulfides are easily formed, and it is also described that it is easier to form sulfides with Zr and Ti than Mn. Further, since Hf has properties quite similar to Zr, it is considered that Hf can easily form a sulfide similarly.

Therefore, in the present Implementation Examples 10 and 11, it is evaluated whether improvement of high temperature ductility and an amelioration effect of weld cracking are obtained in a case wherein Zr and Hf are added instead of Ti. The test is performed under the same condition as that of the first embodiment, also in each process of the test in the present second embodiment.

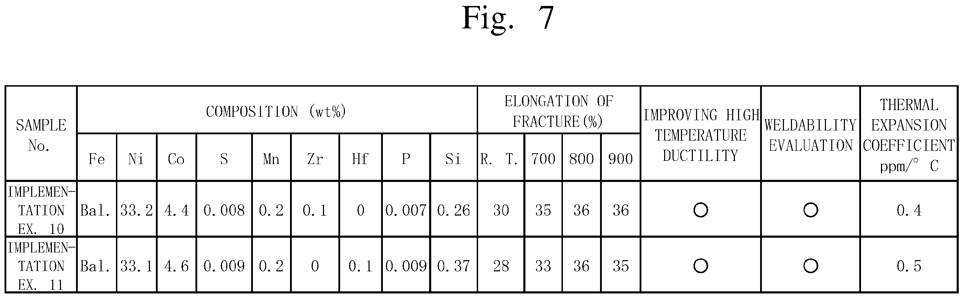

0.1% of Zr is added in the Implementation Example 10, and 0.1 % of Hf is added in the Implementation Example 11, respectively, in a Super Invar alloy, and a Super Invar alloy is produced in compositions as illustrated in FIG. 7.

As illustrated in FIG. 7, the metallic compositions of the Implementation Examples 10 and 11 are in the range as follows:
Ni: 32.1%-32.2%
Co: 4.4%-4.6%
Zr or Hf: 0.1%
Mn: 0.2%
Fe and inevitable impurities: the balance
   Inevitable impurities include following:
   S: 0.008%-0.009%
   P: 0.007%-0.009%
   Si: 0.26%-0.37%
Fe, Ni and Co are essential elements that configure the Super Invar alloy.

Zr or Hf, and Mn are added elements.

In the Implementation Examples 10 and 11, only Zr or Hf, and Mn are added as additives.

In the Implementation Examples 10 and 11, no additive other than Zr or Hf, and Mn is included.

In the Implementation Examples 10 and 11, no other substances including Cr, Al, Nb, Mo, W, V, Ti, Si, Cu, C, S, Be and B are added.

As a result, in both of the Implementation Examples 10 and 11, it is confirmed that high temperature ductility is improved compared to ductility at room temperature, and the similar effect as with Ti is confirmed.

Further, in the Implementation Examples 10 and 11, thermal expansion coefficients of equal to or less than 1.0 ppm/°C are realized as well. Even in weldability evaluation using wires of the Super Invar alloys of the Implementation Examples 10 and 11, a crack is not identified, and they are confirmed to be useful materials.

According to the above, even when Zr or Hf is added instead of Ti, it is possible to obtain the same effect as in a case wherein Ti is added.

Therefore, as illustrated in FIG. 8, a low thermal expansion alloy of the present embodiment is a low thermal expansion alloy including 30 to 35 percent by mass of Ni, 3 to 6 percent by mass of Co, and the balance composed of Fe and trace elements.

The low thermal expansion alloy of the present embodiment is a low thermal expansion alloy wherein 0.02 to 1.0 percent by mass of Zr or Hf is added, and S being an inevitable impurity forms an intermetallic compound with Zr or Hf.

The intermetallic compound includes an intermetallic compound composed of S and Zr or Hf.

When an alloy includes Mn, the intermetallic compound includes an intermetallic compound composed of Mn, S and Zr or Hf.

A mass ratio of Zr or Hf to S is equal to or more than 0.5.

It is possible to provide the Super Invar alloy of the present embodiment as a wire formed by wire drawing. It is possible to produce a metallic weldment by using this wire as a welding material.

It is possible to provide the Super Invar alloy of the present embodiment as alloy powders formed by water atomizing or gas atomizing. It is possible to form a metallic three-dimensional produced object by using the alloy powders as raw powders.

It may be applicable to add 0.02%-1.0% of a mixture of any two or more kinds of Ti, Zr and Hf.

### List of Reference Signs

- 91: material that does not crack
- 92: material that cracks

## Claims

1. An alloy that does not include an additive other than Ti and Mn as an additive, the alloy comprising:
Ni of 30 to 35 percent by mass;
Co of 3 to 6 percent by mass;
Ti of 0.02 to 1.0 percent by mass;
Mn of 0 to 0.2 percent by mass;
an inevitable impurity including S; and
Fe being a balance.

2. The alloy as defined in claim 1, comprising:
the Ni of 32.3 to 32.5 percent by mass;
the Co of 4.4 to 5.1 percent by mass;
the Ti of 0.02 to 1.0 percent by mass; and
the S of 0.007 to 0.01 percent by mass.

3. The alloy as defined in claim 1 or claim 2,
including only Ti as the additive, the alloy comprising intermetallic compounds of Ti and S.

4. The alloy as defined in any one of claim 1 through claim 3,
including only Ti and Mn as the additive, the alloy comprising intermetallic compounds of Mn, Ti and S.

5. An alloy that does not include an additive other than Zr and Mn, or an additive other than Hf and Mn, as an additive,
the alloy comprising:
Ni of 30 to 35 percent by mass;
Co of 3 to 6 percent by mass;
Zr or Hf of 0.02 to 1.0 percent by mass;
Mn of 0 to 0.2 percent by mass;
an inevitable impurity including S; and
Fe being a balance.

6. An alloy, wherein a mass ratio of Ti to S is equal to or more than 0.5,
the alloy comprising:
Ni of 30 to 35 percent by mass;
Co of 3 to 6 percent by mass;
Ti of 0.02 to 1.0 percent by mass;
an inevitable impurity including S; and
Fe being a balance.

7. A wire formed of the alloy as defined in any one of claim 1 through claim 6.

8. An alloy powder formed of the alloy as defined in any one of claim 1 through claim 6.
